(19) Europäisches Patentamt
European Patent Office
Office européen des brevets

(11) **EP 1 519 902 B1**

(12) **FASCICULE DE BREVET EUROPEEN**

(45) Date de publication et mention
de la délivrance du brevet:
**25.03.2020 Bulletin 2020/13**

(21) Numéro de dépôt: **03762724.7**

(22) Date de dépôt: **02.07.2003**

(51) Int Cl.:
***B32B 17/10*** *(2006.01)*          ***G02B 1/115*** *(2015.01)*
***G02B 1/116*** *(2015.01)*          ***C03C 17/34*** *(2006.01)*

(86) Numéro de dépôt international:
**PCT/FR2003/002052**

(87) Numéro de publication internationale:
**WO 2004/005210 (15.01.2004 Gazette 2004/03)**

(54) **SUBSTRAT TRANSPARENT COMPORTANT UN REVETEMENT ANTIREFLET**

TRANSPARENTES SUBSTRAT MIT EINER ANTIREFLEXIONSBESCHICHTUNG

TRANSPARENT SUBSTRATE COMPRISING ANTIGLARE COATING

(84) Etats contractants désignés:
**AT BE BG CH CY CZ DE DK EE ES FI FR GB GR HU IE IT LI LU MC NL PT RO SE SI SK TR**

(30) Priorité: **03.07.2002 FR 0208290**

(43) Date de publication de la demande:
**06.04.2005 Bulletin 2005/14**

(73) Titulaire: **SAINT-GOBAIN GLASS FRANCE**
**92400 Courbevoie (FR)**

(72) Inventeurs:
• **FLEURY, Carinne**
**F-75013 Paris (FR)**
• **HEITZ, Thibaut**
**600018 CHENNAI (IN)**
• **NADAUD, Nicolas**
**F-94250 Gentilly (FR)**

(74) Mandataire: **Saint-Gobain Recherche**
**Département Propriété Industrielle**
**39 Quai Lucien Lefranc**
**93300 Aubervilliers (FR)**

(56) Documents cités:
EP-A- 0 728 712    EP-A- 0 911 302
EP-A2- 0 515 847    WO-A- 97/43224
FR-A- 2 800 998    FR-A- 2 810 118

**Description**

L'invention concerne un substrat transparent, notamment en verre, destiné à être incorporé dans un vitrage et muni, sur au moins une de ses faces, d'un revêtement antireflet.

Un revêtement antireflet est usuellement constitué d'un empilement de couches minces interférentielles, en général une alternance de couches à base de matériau diélectrique à forts et faibles indices de réfraction. Déposé sur un substrat transparent, un tel revêtement a pour fonction d'en diminuer sa réflexion lumineuse, donc d'en augmenter sa transmission lumineuse. Un substrat ainsi revêtu voit donc son ratio lumière transmise/lumière réfléchie augmenter, ce qui améliore la visibilité des objets placés derrière lui. Lorsqu'on cherche à atteindre un effet antireflet maximal, il est alors préférable de munir les deux faces du substrat de ce type de revêtement.

Il y a beaucoup d'applications à ce type de produit : il peut servir de vitrage dans le bâtiment, ou de vitrage dans les meubles de vente, par exemple en tant que présentoir de magasin et verre bombé architectural, afin de mieux distinguer ce qui se trouve dans la vitrine, même quand l'éclairage intérieur est faible par rapport à l'éclairage extérieur. Il peut aussi servir de verre de comptoir.

Des exemples de revêtements antireflets sont décrits dans les brevets EP 0 728 712 et WO97/43224.

La plupart des revêtements antireflets mis au point à ce jour ont été optimisés pour minimiser la réflexion lumineuse à incidence normale, sans prendre en compte l'aspect optique et l'esthétique du vitrage vu de façon oblique, la durabilité mécanique de l'empilement et la tenue du produit aux traitements thermiques. Il est ainsi connu qu'à incidence normale, on peut obtenir des valeurs de réflexion lumineuse $R_L$ très faibles avec des empilements à quatre couches avec une alternance couche à haut indice / couche à bas indice / couche à haut indice / couche à bas indice. Les couches à haut indice sont généralement en $TiO_2$ qui présente effectivement un indice très élevé, d'environ 2,45 et les couches à bas indice sont le plus souvent en $SiO_2$. Les épaisseurs optiques des couches (le produit de leur épaisseur géométrique par leur indice de réfraction) s'expriment successivement de la façon suivante : (e1 + e2) < $\lambda$/4 - e3 $\geq$ $\lambda$/2 - e4 = $\lambda$/4, avec $\lambda$ la longueur d'onde moyennée dans le domaine du visible autour de 500 nm et e1 à e4 les épaisseurs des quatre couches déposées successivement sur le substrat.

L'aspect en réflexion, notamment l'intensité de la réflexion lumineuse, n'est cependant pas satisfaisant dès que l'on s'éloigne un peu d'une vision perpendiculaire au vitrage. La résistance mécanique et la tenue thermomécanique de ce type d'empilements ne sont également pas satisfaisantes.

Des études ont été faites pour prendre en compte un angle de vision oblique, mais n'ont pas donné non plus pleinement satisfaction : on peut par exemple citer le brevet EP-0 515 847 qui propose un empilement deux couches du type $TiO_2$+$SiO_2$/$SiO_2$ ou à trois couches du type $TiO_2$+$SiO_2$/$TiO_2$/$SiO_2$ déposées par sol-gel, mais qui n'est pas assez performant. Cette technique de dépôt présente également l'inconvénient de produire des empilements de faible résistance mécanique.

La publication FR2800998 décrit un empilement à quatre couches dans lequel les couches à haut indice sont à base d'oxyde(s) métallique (s) choisi(s) parmi ZnO, SnO2, ZrO2, ou sont à base de nitrure(s).

L'invention a alors pour but de remédier aux inconvénients ci-dessus, en cherchant à mettre au point un revêtement antireflet qui garantisse à la fois une bonne esthétique du vitrage et ce quel que soit l'angle d'incidence, et notamment à 0°, une durabilité mécanique élevée et une bonne tenue aux traitements thermiques (recuit, trempe, bombage, pliage), et ceci sans compromettre la faisabilité économique et/ou industrielle de sa fabrication.

L'invention a tout d'abord pour objet un substrat transparent, notamment verrier, comportant sur au moins une de ses faces un revêtement antireflet de couches minces en matériau diélectrique d'indices de réfraction alternativement forts et faibles, notamment à effet antireflet à incidence normale, et se définissant de la façon suivante. Il comporte successivement :

- une première couche 1 à haut indice, d'indice de réfraction $n_1$ compris entre 1,8 et 2,3 et d'épaisseur géométrique $e_1$ comprise entre 5 et 50 nm,
- une seconde couche 2 à bas indice, d'indice de réfraction $n_2$ compris entre 1,35 et 1,65, d'épaisseur géométrique $e_2$ comprise entre 5 et 50 nm,
- une troisième couche 3 à haut indice, d'indice de réfraction $n_3$ compris entre 1,8 et 2,3, d'épaisseur géométrique $e_3$ comprise entre 40 et 80 nm,
- une quatrième couche 4 à bas indice, d'indice de réfraction $n_4$ compris entre 1,35 et 1,65, d'épaisseur géométrique $e_4$ comprise entre 40 et 120 nm, cet empilement étant d'une part, adapté pour garantir une bonne esthétique du substrat et ce quel que soit l'angle d'incidence et d'autre part, apte à subir des traitements thermiques.

Selon l'invention, la première couche à haut indice et/ou la troisième couche à haut indice sont à base d'oxydes mixtes mixtes étain/zinc (SnxZnyOz), ou d'oxydes mixtes zinc-titane (TiZnO$_x$) ou à base d'oxyde mixte silicium/titane (SixTiyOz).

Au sens de l'invention, on comprend par "couche" soit une couche unique, soit une superposition de couches où chacune d'elles respecte l'indice de réfraction indiqué et où la somme de leurs épaisseurs géométriques reste également la valeur indiquée pour la couche en question.

Au sens de l'invention, les couches sont en matériau diélectrique, notamment du type oxyde, nitrure ou d'oxynitrure de métaux comme cela sera détaillé ultérieurement. On n'exclut cependant pas qu'au moins l'une d'entre elles soit modifiée de façon à être au moins un peu conductrice, par exemple en dopant un oxyde métallique, ceci par exemple pour conférer à l'empilement antireflet également une fonction antistatique.

L'invention s'intéresse préférentiellement aux substrats verriers, mais s'applique aussi aux substrats transparents à base de polymère, par exemple en polycarbonate.

L'invention porte donc sur un empilement antireflet à au moins une séquence de quatre couches alternant couches à haut et bas indices de réfraction.

Les critères d'épaisseur et d'indice de réfraction retenus dans l'invention permettent d'obtenir un effet antireflet à large bande de basse réflexion lumineuse, présentant une teinte neutre en transmission et une bonne esthétique en réflexion, et ce quel que soit l'angle d'incidence sous lequel on observe le substrat ainsi revêtu.

La sélection de ces critères a été délicate, car les inventeurs ont pris en compte la faisabilité industrielle du produit ainsi que l'aspect en réflexion lumineuse à deux niveaux : à la fois en voulant minimiser la valeur de réflexion lumineuse $R_L$ à incidence normale en elle-même, mais aussi en voulant obtenir pour la réflexion lumineuse oblique une colorimétrie satisfaisante, c'est-à-dire une couleur en réflexion dont la teinte et l'intensité étaient acceptables sur le plan esthétique, et ceci sans compromettre les propriétés de durabilité mécanique et de résistance aux traitements thermiques de l'empilement.

Les inventeurs y sont parvenus, avec notamment l'abaissement d'au moins 3 ou 4% de la valeur de $R_L$ dans le visible, et préférentiellement l'obtention de valeurs de b* dans le système de colorimétrie (L, a*, b*) négatives pour cette même réflexion lumineuse. Cela se traduit par une diminution significative des reflets et une couleur verte, bleue ou violette en réflexion (évitant l'aspect jaunâtre) qui est actuellement jugée esthétique dans de nombreuses applications, notamment dans le domaine du bâtiment. Les inventeurs ont également obtenu que ces mêmes empilements présentent une résistance à l'abrasion telle que le flou provoqué par un test TABER ne dépasse pas 3% et une résistance aux traitements thermiques telle que le produit puisse être trempé ou bombé à des rayons de courbures supérieurs à 1 mètre et même dans certains cas pour des rayons de courbure de l'ordre de 10 cm.

On rappellera ci-après le principe de fonctionnement d'un appareil permettant de réaliser un test TABER.

Sur un échantillon positionné horizontalement sur un plateau tournant reposent 2 meules abrasives tarées à 250 g. Une charge d'appui supérieure(jusqu'à un total de 1 kg) peut être ajustée en fonction du test. Lors de la rotation de l'échantillon, les meules tournent en sens inverse sur une couronne de $30cm^2$, et ceci 2 fois au cours de chaque rotation.

Le test de résistance à l'abrasion comprend trois étapes :

- une étape de nettoyage des meules
- l'abrasion de l'échantillon proprement dit
- une mesure de flou provoqué par cette abrasion

En ce qui concerne l'étape de nettoyage, elle consiste à positionner à la place de l'échantillon séquentiellement

- un abrasif (25 tours)
- un verre « float » nu (100 tours)

L'étape d'abrasion est réalisée sur un échantillon 10 cm x 10 cm

La mesure de flou est réalisée à l'aide d'un turbidimètre BYK Gardner XL-211. Avec cet appareil on mesure le flou sur l'empreinte laissée par la meule du test TABER lors de l'abrasion de la manière suivante :

$$\Delta H = (\text{Transmission totale de l'échantillon} / \text{Transmission diffusée par l'échantillon}) \times 100$$

Pour l'application visée dans la présente demande, on utilise les conditions opératoires suivantes : Meule CS 10 F, Charge 500 g, 650 tours

Les deux caractéristiques les plus marquantes de l'invention sont les suivantes :

↪ Il a été découvert que contrairement au choix fait habituellement pour les couches à haut indice, il n'était pas nécessaire et il était même désavantageux, de choisir des matériaux à indice très élevé comme le $TiO_2$. Il s'est avéré qu'il était plus judicieux au contraire d'utiliser pour ces couches des matériaux d'indice de réfraction plus modéré, notamment d'au plus 2,2. Cela va ainsi à l'encontre de l'enseignement connu sur les empilements antireflet en général. Il a ainsi été montré que des matériaux présentant des indices autour de 2,0 permettaient d'obtenir de bons antireflets qui présentent des propriétés optiques (réflexion lumineuse à 0°) comparables à celles obtenues avec des matériaux dont l'indice de réfraction est sensiblement voisin de 2.45 (TiO$_2$ par exemple).

↪ Il a également été montré que l'utilisation de matériaux à indice plus modéré tels que Sn$_x$Zn$_y$O$_z$, TiZnO$_x$ ou Si$_x$Ti$_y$O$_z$ permettait d'augmenter de façon significative les propriétés de résistance mécanique (résistance à l'abrasion, aux rayures, au nettoyage) et de résistance aux traitements thermiques (recuit, trempe, bombage) des empilements.

Les inventeurs ont ainsi exploité le fait qu'à incidence oblique, le spectre de basse réflexion s'élargissait, et que l'on pouvait ainsi se permettre d'utiliser les matériaux dont l'indice est autour de 2, comme les oxydes mixtes étain-zinc Sn$_x$Zn$_y$O$_z$, les oxydes mixtes zinc-titane TiZnO$_x$ ou silicium-titane Si$_x$Ti$_y$O$_z$. Par rapport au TiO$_2$ notamment, ces matériaux présentent, en plus de leurs meilleures propriétés mécaniques, l'avantage d'avoir des vitesses de dépôt bien plus élevées quand on utilise la technique de dépôt dite de pulvérisation cathodique. Dans cette gamme modérée d'indices, on a également un choix plus important de matériaux pouvant être déposés par pulvérisation cathodique, ce qui offre plus de souplesse dans la fabrication industrielle et plus de possibilités pour ajouter des fonctionnalités supplémentaires à l'empilement comme cela sera détaillé ci-dessous.

Sont données ci-après les gammes préférées des épaisseurs géométriques et des indices des quatre couches de l'empilement selon l'invention, cet empilement étant dénommé A :

- n$_1$ et/ou n$_3$ sont compris entre 1,85 et 2,15, notamment entre 1,90 et 2,10.
- n$_2$ et/ou n$_4$ sont compris entre 1,35 et 1,65.
- e$_1$ est compris entre 5 et 50 nm, notamment entre 10 et 30 nm, ou entre 15 et 25 nm.
- e$_2$ est notamment inférieur ou égal à 35 nm ou à 30 nm, en étant notamment compris entre 10 et 35 nm.
- e$_3$ est compris entre entre 45 et 80 nm.
- e$_4$ est compris entre 45 et 110 nm et préférentiellement entre 70 et 100 nm..

Selon une variante hors invention, on peut remplacer la première couche 1 à haut indice et la seconde couche 2 à bas indice par une couche unique 5 à indice de réfraction dit "intermédiaire" e$_5$, notamment compris entre 1,65 et 1,80 et ayant de préférence une épaisseur optique e.$_{opt.5}$ comprise entre 50 et 140 nm (de préférence 85 à 120 nm). Dans les empilements antireflets conventionnels à trois couches, optimisés pour une vision perpendiculaire, cette épaisseur est plutôt au-dessus de 120 nm. Cette couche à indice intermédiaire a un effet optique similaire à celui d'une séquence couche à haut indice / couche à bas indice quand il s'agit de la première séquence, des deux couches les plus proches du substrat porteur de l'empilement. Elle présente l'avantage de diminuer le nombre global de couches de l'empilement. Elle est de préférence à base d'un mélange entre d'une part de l'oxyde de silicium, et d'autre part au moins un oxyde métallique choisi parmi l'oxyde d'étain, l'oxyde de zinc, l'oxyde de titane. Elle peut aussi être à base d'oxynitrure ou oxycarbure de silicium et/ou à base d'oxynitrure d'aluminium.

Les matériaux les plus appropriés pour constituer la première et/ou la troisième couche de l'empilement A, celles à haut indice, sont à base d'oxyde(s) métallique(s) choisi(s) parmi les oxydes mixtes étain-zinc (Sn$_x$Zn$_y$O$_z$), les oxydes mixtes zinc-titane (TiZnO$_x$) ou silicium-titane (Si$_x$Ti$_y$O$_z$.). Tous ces matériaux peuvent être éventuellement dopés pour améliorer leur propriétés de résistance chimique et/ou mécanique et/ou électrique.

Les matériaux les plus appropriés pour constituer la seconde et/ou la quatrième couche de l'empilement A, celles à bas indice, sont à base d'oxyde de silicium, d'oxynitrure et/ou d'oxycarbure de silicium ou encore à base d'un oxyde mixte de silicium et d'aluminium. Un tel oxyde mixte tend à avoir une meilleure durabilité, notamment chimique, que du SiO$_2$ pur (Un exemple en est donné dans le brevet EP- 791 562). On peut ajuster la proportion respective des deux oxydes pour obtenir l'amélioration de durabilité escomptée sans trop augmenter l'indice de réfraction de la couche.

Ainsi, les substrats incorporant de telles couches dans leur empilement peuvent subir sans dommage, des traitements thermiques comme un recuit, une trempe, un bombage ou même un pliage. Ces traitements thermiques ne doivent pas altérer les propriétés optiques et cette fonctionnalité est importante pour les vitrages pour comptoir de magasin, car il s'agit de vitrage devant subir des traitements thermiques à haute température, du type bombage, trempe, recuit, opération de feuilletage, où les verres doivent être chauffés à au moins 120°C (feuilletage) jusqu'à 500 à 700°C (bombage, trempe). Il devient alors décisif de pouvoir déposer les couches minces avant le traitement thermique sans que cela pose de problème (déposer des couches sur un verre bombé est délicat et coûteux, il est beaucoup plus simple sur le plan industriel de faire les dépôts avant tout traitement thermique).

Le bombage peut être avec un petit rayon de courbure (de l'ordre de 1 m), voire avec un très petit rayon de courbure (de l'ordre d'une dizaine de centimètres), typiquement pour une application relevant des vitrines, comptoirs de magasins en particulier.

On remarquera que, par rapport aux empilements de l'art antérieur, l'empilement selon l'invention et tout particulièrement l'association SiO$_2$/Si$_3$N$_4$ présente l'avantage d'être stable aux traitements thermiques, de permettre des bombages pour des petits rayons de courbure (R=1 m environ); de même l'association SiO$_2$/oxydes mixtes étain-

zinc ou silicium/titane garantit des bombages, voire des pliages pour très petits rayons de courbure (R=10 cm environ). En outre, ces deux associations, qui font l'objet de la présente invention, garantissent une durabilité mécanique et chimique accrues et dans tous les cas supérieure à celles obtenues avec un empilement comportant du $TiO_2$.. En effet, aucun empilement de l'art antérieur ne permettait d'obtenir à la fois des propriétés de durabilité mécanique et chimique élevées et une aptitude à subir des bombages et/ou des pliages sans présenter des défauts optiques majeurs.

On peut ainsi avoir une seule configuration d'empilement antireflet que le verre porteur soit ou non destiné à subir un traitement thermique. Même s'il n'est pas destiné à être chauffé, il reste intéressant d'utiliser au moins une couche en nitrure, car elle améliore la durabilité mécanique et chimique de l'empilement dans son ensemble.

Le verre choisi pour le substrat revêtu de l'empilement A selon l'invention ou pour les autres substrats qui lui sont associés pour former un vitrage, peut être particulier, par exemple extra-clair du type "Diamant", ou clair du type "Planilux" ou teinté du type "Parsol", trois produits commercialisés par Saint-Gobain Vitrage, ou encore être de type "TSA" ou "TSA ++" comme décrit dans le brevet EP 616 883. IL peut aussi s'agir de verres éventuellement teintés comme décrit dans les brevets WO 94/14716; WO 96/00194, EP 0 644 164 ou WO 96/28394. Il peut être filtrant vis-à-vis de rayonnements du type ultraviolet.

L'invention a également pour objet les vitrages incorporant les substrats munis de l'empilement A de couches définies plus haut. Le vitrage en question peut être "monolithique" c'est-à-dire composé d'un seul substrat revêtu de l'empilement de couches sur une de ses faces. Sa face opposée peut être dépourvue de tout revêtement antireflet, en étant nue ou recouverte d'un autre revêtement B ayant une autre fonctionnalité. Il peut s'agir d'un revêtement à fonction anti-solaire (utilisant par exemple une ou plusieurs couches d'argent entourées de couches en diélectrique, ou des couches en nitrures comme TiN ou ZrN ou en oxydes métalliques ou en acier ou en alliage Ni-Cr), à fonction bas-émissive (par exemple en oxyde de métal dopé comme SnO2:F ou oxyde d'indium dopé à l'étain ITO ou une ou plusieurs couches d'argent), à fonction anti-statique (oxyde métallique dopé ou sous-stoechiométrique en oxygène), couche chauffante (oxyde métallique dopé, Cu, Ag par exemple) ou réseau de fils chauffants (fils de cuivre ou bandes sérigraphiées à partir de pâte à l'argent conductrice), anti-buée (à l'aide d'une couche hydrophile), anti-pluie (à l'aide d'une couche hydrophobe, par exemple à base de polymère fluoré), anti-salissures (revêtement photocatalytique comprenant du TiO2 au moins partiellement cristallisé sous forme anatase).

Ladite face opposée peut aussi être munie d'un empilement antireflet, pour maximiser l'effet antireflet recherché. Dans ce cas, soit il s'agit également d'un empilement antireflet répondant aux critères de la présente invention, soit il s'agit d'un autre type de revêtement antireflet.

Un autre vitrage intéressant incorporant un substrat revêtu selon l'invention a une structure feuilletée, qui associe deux substrats verriers à l'aide d'une ou plusieurs feuilles en matériau thermoplastique comme le polyvinylbutyral PVB.. Dans ce cas, l'un des deux substrats est muni, en face externe (opposée à l'assemblage du verre avec la feuille thermoplastique), de l'empilement antireflet selon l'invention. L'autre verre, en face externe également, pouvant comme précédemment, être nu, revêtu de couches ayant une autre fonctionnalité, revêtu du même d'empilement antireflet ou d'un autre type (B) d'empilement antireflet, ou encore d'un revêtement ayant une autre fonctionnalité comme dans le cas précédent (cet autre revêtement peut aussi être disposé non pas sur une face opposée à l'assemblage, mais sur une des faces de l'un des substrats rigides qui se trouve tournée du côté de la feuille thermoplastique d'assemblage). On peut ainsi munir le vitrage feuilleté d'un réseau de fils chauffants, d'une couche chauffante ou d'un revêtement anti-solaire à l'"intérieur" du feuilleté.

L'invention comprend aussi les vitrages munis de l'empilement antireflet de l'invention et qui sont des vitrages multiples, c'est-à-dire utilisant au moins deux substrats séparés par une lame de gaz intermédiaire (double ou triple vitrage). Là encore, les autres faces du vitrage peuvent être également traitées antireflet ou présenter une autre fonctionnalité.

A noter que cette autre fonctionnalité peut aussi consister à disposer sur une même face l'empilement antireflet et l'empilement ayant une autre fonctionnalité (par exemple en surmontant l'antireflet d'une très fine couche de revêtement anti-salissures.), l'ajout de cette fonctionnalité supplémentaire ne se faisant pas bien entendu au détriment des propriétés optiques.

L'invention a également pour objet le procédé de fabrication des substrats verriers à revêtement antireflet selon l'invention. Un procédé consiste à déposer l'ensemble des couches, successivement les unes après les autres, par une technique sous vide, notamment par pulvérisation cathodique assistée par champ magnétique ou par décharge couronne. Ainsi, on peut déposer les couches d'oxyde par pulvérisation réactive du métal en question en présence d'oxygène et les couches en nitrure en présence d'azote. Pour faire du $SiO_2$ ou du $Si_3N_4$, on peut partir d'une cible en silicium que l'on dope légèrement avec un métal comme l'aluminium pour la rendre suffisamment conductrice.

L'invention a également pour objet les applications de ces vitrages, dont la plupart ont déjà été évoquées : vitrine, présentoir, comptoir de magasin, vitrages pour le bâtiment, pour tout dispositif d'affichage comme les écrans d'ordinateur, la télévision, tout mobilier verrier, tout verre décoratif, les toits pour automobile. Ces vitrages peuvent être bombés/trempés après dépôt des couches.

Les détails et caractéristiques avantageuses de l'invention vont maintenant ressortir des exemples suivants non limitatifs, à l'aide des figures :

La figure 1 est un substrat muni sur une de ses deux faces d'un empilement antireflet à quatre couches selon l'invention

La figure 2 est un substrat muni sur chacune de ses faces d'un empilement antireflet à quatre couches selon l'invention,

Tous les exemples 1 à 4 concernent des empilements antireflets à quatre couches. Les couches ont toutes été déposées de façon conventionnelle par pulvérisation cathodique assistée par champ magnétique et réactive, en atmosphère oxydante à partir de cible de Si ou de métal pour faire des couches en SiO2 ou en oxyde métallique, à partir de cible de Si ou de métal en atmosphère nitrurante pour faire des nitrures, et dans une atmosphère mixte oxydante/nitrurante pour faire les oxynitrures. Les cibles en Si peuvent contenir un autre métal en faible quantité, notamment Zr, Al, notamment afin de les rendre plus conductrices.

Pour les exemples 1 à 4 (hors invention), l'empilement antireflet utilisé est le suivant :

(6): Verre
(1): $Si_3N_4$     indice n1 = 2
(2): $SiO_2$     indice n2 = 1,46
(3): $Si_3N_4$     indice n3 = 2
(4): $SiO_2$     indice n4 = 1,46

Exemple 1

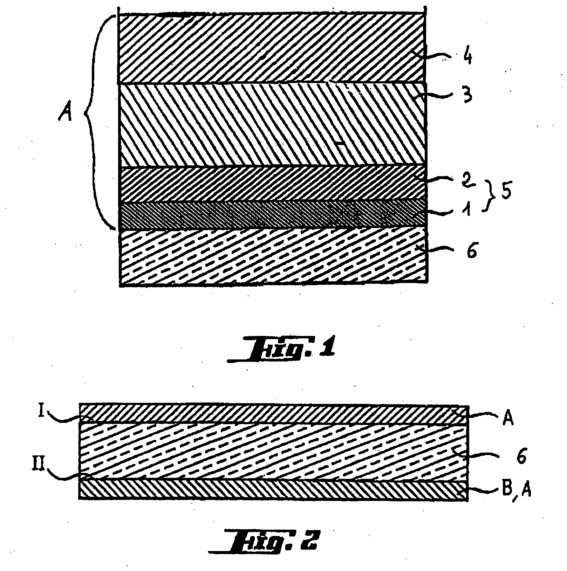

Il s'agit du verre 6 de la figure 1. Le verre est un verre clair silico-sodo-calcique de 4 mm d'épaisseur, commercialisé sous le nom de Planilux par Saint-Gobain Vitrage.
Ce verre constitue un vitrage monolithique et il est muni sur ses deux faces de l'empilement antireflet.
Le tableau ci-dessous résumé l'indice $n_i$ et l'épaisseur géométrique $e_i$ en nanomètres de chacune des couches :

| EXEMPLE 1 | COUCHE (1) | COUCHE (2) | COUCHE (3) | COUCHE (4) |
|---|---|---|---|---|
| $n_i$ | 2,0 | 1,46 | 2,0 | 1,46 |
| $E_i$ | 35 nm | 19 nm | 50 nm | 90 nm |

Cet empilement est particulièrement adapté pour une application relevant du bâtiment, pour laquelle la couleur en transmission est neutre (voisine du gris), la réflexion lumineuse est très sensiblement inférieure à 2 % et avantageusement inférieure à 1%, les valeurs de a*,b* sont respectivement 3 et -10, et la couleur en réflexion à 0° d'incidence est bleue.

Exemple 2

Il s'agit du verre 6 de la figure 1 muni sur ses deux faces de l'empilement antireflet.
Le tableau ci-dessous résume l'indice $n_i$ et l'épaisseur géométrique $e_i$ en nanomètres de chacune des couches :

| EXEMPLE 2 | COUCHE (1) | COUCHE (2) | COUCHE (3) | COUCHE (4) |
|---|---|---|---|---|
| $n_i$ | 2,0 | 1,46 | 2,0 | 1,46 |
| $e_i$ | 18 nm | 28 nm | 102 nm | 90 nm |

Cet exemple a pour but de minimiser au maximum la valeur de $R_L$ du verre 6 suivant diverses incidences et pour lesquelles les valeurs de $R_L$ sont préférentiellement inférieures à 1%. Cet empilement présente l'avantage d'offrir une absence de variation de la couleur en réflexion suivant l'angle d'incidence, pour ces mêmes valeurs d'incidence, les valeurs de a*,b* étant avec les caractéristiques précédentes résumées dans le tableau ci-après :

| Incidence | $R_L$ | a* | b* | Couleur |
|---|---|---|---|---|
| 0° | < 1 % | 13 | -31 | Bleu |
| 20° | < 1 % | 15 | -30 | Bleu |
| 40° | < 1 % | 14 | -19 | Bleu |

Exemple 3

Il s'agit du verre 6 de la figure 1. Le verre est un verre clair silico-sodo-calcique de 4 mm d'épaisseur, commercialisé sous le nom de Planilux par Saint-Gobain Vitrage.
Ce verre est muni sur ses deux faces de l'empilement antireflet.
Le tableau ci-dessous résume l'indice $n_i$ et l'épaisseur géométrique $e_i$ en nanomètres de chacune des couches :

| EXEMPLE 3 | COUCHE (1) | COUCHE (2) | COUCHE (3) | COUCHE (4) |
|---|---|---|---|---|
| $n_i$ | 2,0 | 1,46 | 2,0 | 1,46 |
| $e_i$ | 26 nm | 25 nm | 76 nm | 90 nm |

Cet empilement est particulièrement adapté pour une application relevant des vitrines ou meubles d'exposition ou de vente, pour laquelle la couleur en transmission est neutre (voisine du gris), la réflexion lumineuse est très sensiblement inférieure à 2 % et avantageusement inférieure à 1%, les valeurs de a*,b* sont respectivement 27 et -27, et la couleur en réflexion à O° d'incidence est rouge violet. Cet empilement peut subir des traitements thermiques, il est trempable et bombable et il n'apparaît pas de défaut optique pour des rayons de courbure supérieurs à 1 m. Le flou mesuré après bombage, dans la zone de plus forte courbure, est inférieur à $\Delta H = 6\%$.

Exemple 4

Il s'agit du verre 6 de la figure 1. Le verre est un verre clair silico-sodo-calcique de 4 mm d'épaisseur, commercialisé sous le nom de Planilux par Saint-Gobain Vitrage.
Ce verre est muni sur ses deux faces de l'empilement antireflet.
Le tableau ci-dessous résume l'indice $n_i$ et l'épaisseur géométrique $e_i$ en nanomètres de chacune des couches :

| EXEMPLE 4 | COUCHE (1) | COUCHE (2) | COUCHE (3) | COUCHE (4) |
|---|---|---|---|---|
| $n_i$ | 2,0 | 1,46 | 2,0 | 1,46 |
| $e_i$ | 26 nm | 25 nm | 76 nm | 90 nm |

Cet empilement est particulièrement adapté pour une application relevant des vitrines ou meubles d'exposition ou de vente, pour laquelle la couleur en transmission est neutre (voisine du gris), la réflexion lumineuse est très sensiblement inférieure à 2 %.
Cet empilement présente l'avantage d'offrir une absence de variation de la couleur (rouge violet) en réflexion suivant l'angle d'incidence, pour ces mêmes valeurs d'incidence, les valeurs de a*,b* étant avec les caractéristiques précédentes résumées dans le tableau ci-après :

| Incidence | $R_L$ | a* | b* | Couleur |
|---|---|---|---|---|
| 0° | < 1 % | 27 | -27 | Rouge violet |
| 20° | < 1 % | 24 | -18 | Rouge violet |
| 40° | 1.4 % | 14 | 1 | Rouge |

Cet empilement peut subir des traitements thermiques, il est trempable et bombable et il n'apparaît pas de défaut optique pour des rayons de courbure supérieurs à 1 m. Le flou mesuré après bombage, dans la zone de plus forte courbure, est inférieur à $\Delta H = 6\%$.
Pour les empilements faisant l'objet des exemples 1 à 4, et à base de $Si_3N_4$, leur résistance mécanique au test TABER est la suivante (selon méthode déjà explicitée) :
Résistance mécanique :

$\Delta H$ (avant trempe) < 1 %
$\Delta H$ (après trempe) < 1 %

et leur résistance aux traitements thermiques : à la suite d'une trempe, on ne constate pas de défauts optiques, le flou mesuré après trempe est inférieur à $\Delta H$ = 3%., et avantageusement inférieur à 1 %, et à la suite d'un bombage dont le rayon de courbure est supérieur à 100 cm, on ne constate là encore pas défauts optiques, le flou mesuré après bombage, dans la zone de plus forte courbure, est inférieur à $\Delta H$ = 6%.

EXEMPLE 5

Pour cet exemple, l'empilement antireflet utilisé est le suivant :

(6) : Verre
(1): $SnZn_2O_4$ indice n1 = 2,05
(2): $SiO_2$ indice n2 = 1,46
(3): $SnZn_2O_4$ indice n3 = 2,05
(4): $SiO_2$ indice n4 = 1,46

Il s'agit du verre 6 de la figure 1. Le verre est un verre clair silico-sodo-calcique de 4 mm d'épaisseur, commercialisé sous le nom de Planilux par Saint-Gobain Vitrage.

Ce verre constitue un vitrage monolithique et il est muni sur ses deux faces de l'empilement antireflet.

Le tableau ci-dessous résumé l'indice $n_i$ et l'épaisseur géométrique $e_i$ en nanomètres de chacune des couches :

| EXEMPLE 5 | COUCHE (1) | COUCHE (2) | COUCHE (3) | COUCHE (4) |
|---|---|---|---|---|
| $n_i$ | 2,05 | 1,46 | 2,05 | 1,46 |
| $e_i$ | 20 nm | 30 nm | 77 nm | 91 nm |

Cet empilement est particulièrement adapté pour une application relevant des vitrines, meubles d'exposition de vente, pour laquelle la couleur en transmission est neutre (voisine du gris), la réflexion lumineuse est très sensiblement inférieure à 2 % et avantageusement inférieure à 1%, les valeurs de a*,b* sont respectivement 18 et -19, et la couleur en réflexion à O° d'incidence est rouge, violet.

Pour l'empilement faisant l'objet de cet exemple 5, et à base de $SnZn_2O_4$, la résistance mécanique au test TABER (selon méthode précédemment décrite) est la suivante :
Résistance mécanique :

$\Delta H$ (avant trempe) de l'ordre de 3 à 4 %
$\Delta H$ (après trempe) de l'ordre 1.5 à 2.5

et leur résistance aux traitements thermiques : à la suite d'une trempe, on ne constate pas défauts optiques, le flou mesuré après trempe est inférieur à $\Delta H$ = 3%., et avantageusement inférieur à 1 %., et à la suite d'un bombage dont le rayon de courbure est supérieur à 10 cm, on ne constate là encore pas défauts optiques ,le flou mesuré après bombage, dans la zone de plus forte courbure, est inférieur à $\Delta H$ = 6%.

EXEMPLE 6

Pour cet exemple, l'empilement antireflet utilisé est le suivant :

(6): Verre
(1): SiTiOx indice n1 = 2,00
(2): $SiO_2$ indice n2 = 1,46
(3): SiTiOx indice n3 = 2,00

(suite)

(4): $SiO_2$     indice n4 = 1,46

Il s'agit du verre 6 de la figure 1. Le verre est un verre clair silico-sodo-calcique de 4 mm d'épaisseur, commercialisé sous le nom de Planilux par Saint-Gobain i Vitrage. Ce verre constitue un vitrage monolithique et il est muni sur ses deux faces de l'empilement antireflet.

Le tableau ci-dessous résumé l'indice $n_i$ et l'épaisseur géométrique $e_i$ en nanomètres de chacune des couches :

| EXEMPLE 6 | COUCHE (1) | COUCHE (2) | COUCHE (3) | COUCHE (4) |
|---|---|---|---|---|
| $n_i$ | 2,00 | 1,46 | 2,00 | 1,46 |
| $e_i$ | 21 nm | 28 nm | 78 nm | 93nm |

Cet empilement est particulièrement adapté pour une application relevant des vitrines et des meubles d'exposition de vente, pour laquelle la couleur en transmission est neutre (voisine du gris), la réflexion lumineuse est très sensiblement inférieure à 2 % et avantageusement inférieure à 1%, les valeurs de a*,b* sont respectivement 32 , -34, et la couleur en réflexion à O° d'incidence est rouge violet.

Pour l'empilement faisant l'objet de cet exemple 6, à base de SiTiOx, la résistance mécanique au test TABER (suivant méthode précédemment décrite) est la suivante :
Résistance mécanique :

$\Delta$H (avant trempe) de l'ordre de 2 à 3 %
$\Delta$H (après trempe) environ 2 %

et la résistance aux traitements thermiques : à la suite d'une trempe, on ne constate pas défauts optiques, le flou mesuré après trempe est inférieur à $\Delta$H = 3%., et avantageusement inférieur à 1 %, et à la suite d'un bombage dont le rayon de courbure est supérieur à 10 cm, on ne constate là encore que peu de défauts optiques, le flou mesuré après bombage, dans la zone de plus forte courbure, est inférieur à $\Delta$H = 6%..

Tous ces exemples (les 1 à 6) sont à comparer avec un empilement connu de l'art antérieur et qui présente les caractéristiques suivantes :
Pour cet exemple, l'empilement antireflet utilisé est le suivant :

(6):     Verre
(1):     $TiO_2$     indice n1 = 2,45
(2):     $SiO_2$     indice n2 = 1,46
(3):     $TiO_2$     indice n3 = 2,45
(4):     $SiO_2$     indice n4 = 1,46

Le tableau ci-dessous résumé l'indice $n_i$ et l'épaisseur géométrique $e_i$ en nanomètres de chacune des couches :

| EXEMPLE de l'art antérieur | COUCHE (1) | COUCHE (2) | COUCHE (3) | COUCHE (4) |
|---|---|---|---|---|
| $n_i$ | 2,45 | 1,46 | 2,45 | 1,46 |
| $e_i$ | 30 nm | 30 nm | 100 nm | 100 nm |

La réflexion lumineuse est voisine de 0,85, les valeurs de a*,b* sont respectivement -5.9 , -1.6 .

Pour l'empilement faisant l'objet de cet exemple connu de l'art antérieur, à base de $TiO_2$, la résistance mécanique au test TABER (selon méthode précédemment décrite) est la suivante :
Résistance mécanique :

$\Delta$H (avant trempe) 4.5 %
$\Delta$H (après trempe) 5 %

et la résistance aux traitements thermiques : à la suite d'une trempe, on constate quelques défauts optiques, et à la suite d'un bombage dont le rayon de courbure est supérieur à 100 cm, on constate là encore de nombreux défauts optiques, le flou mesuré après bombage, dans la zone de plus forte courbure, est ΔH égal à 38 %.

On peut également comparer les exemples 1 à 6, à une variante de l'empilement dans lequel l'épaisseur de la quatrième couche a été portée à 70 nm.

Verre/SnZn$_2$O$_4$/SiO$_2$/SnZn$_2$O$_4$/SiO$_2$

| Variante de l'empilement A | Couche 1 | Couche 2 | Couche 3 | Couche 4 |
|---|---|---|---|---|
| ni | 2.05 | 1.46 | 2.05 | 1.46 |
| ei | 20 | 30 | 77 | 70 |

Optique : R$_L$=4,2% a*= 6 b*= 26

Résistance mécanique : ΔH (avant trempe)= 3-4% ; ΔH (après trempe)= 1.5-2.5%

Résistance aux traitements thermiques : trempe : pas de défauts, bombage pour R≥10cm : pas de défauts

On constate alors que la couleur n'est pas optimisée (elle tend vers le jaune, jaunâtre) et la réflexion lumineuse n'est pas améliorée.

## Revendications

1.  Substrat transparent (6), notamment verrier, comportant sur au moins une de ses faces un revêtement antireflet, notamment à incidence normale, fait d'un empilement (A) de couches minces en matériau diélectrique d'indices de réfraction alternativement forts et faibles, l'empilement comportant successivement :

    - une première couche (1), à haut indice, d'indice à réfraction n$_1$ compris entre 1,8 et 2,2 et d'une épaisseur géométrique e$_1$ comprise entre 5 et 50 nm,
    - une seconde couche (2), à bas indice, d'indice de réfraction n$_2$ compris entre 1,35 et 1,65 et d'épaisseur géométrique e$_2$ comprise entre 5 et 50 nm,
    - une troisième couche (3), à haut indice, d'indice de réfraction n$_3$ compris entre 1,8 et 2,2 et d'épaisseur géométrique e$_3$ comprise entre 40 et 80 nm,
    - une quatrième couche (4), à bas indice, d'indice de réfraction n$_4$ compris entre 1,35 et 1,65 et d'épaisseur géométrique e$_4$ comprise entre 40 et 120 nm,

    cet empilement étant d'une part, adapté pour garantir une bonne esthétique du substrat et ce quel que soit l'angle d'incidence et d'autre part, apte à subir des traitements thermiques, **caractérisé en ce que** la première couche à haut indice (1) et/ou la troisième couche à haut indice (3) sont à base d'oxydes mixtes étain/zinc (Sn$_x$Zn$_y$O$_z$), ou à base d'oxyde mixte zinc-titane (TiZnO$_x$) ou à base d'oxyde mixte silicium/titane (Si$_x$Ti$_y$O$_z$).

2.  Substrat (6) selon la revendication 1, **caractérisé en ce que** n$_1$ et/ou n$_3$ sont compris entre 1,85 et 2,15, notamment entre 1,90 et 2,10.

3.  Substrat (6) selon l'une des revendications précédentes, **caractérisé en ce que** n$_2$ et/ou n$_4$ sont compris entre 1,35 et 1,65.

4.  Substrat (6) selon l'une des revendications précédentes, **caractérisé en ce que** e$_1$ est comprise entre 10 et 30 nm, ou entre 15 et 25 nm.

5.  Substrat (6) selon l'une des revendications précédentes, **caractérisé en ce que** e$_2$ est inférieur ou égal à 35 nm ou à 30 nm, en étant notamment compris entre 10 et 35 nm.

6.  Substrat (6) selon l'une des revendications précédentes, **caractérisé en ce que** e$_3$ est comprise entre 45 et 80 nm.

7.  Substrat (6) selon l'une des revendications précédentes, **caractérisé en ce que** e$_4$ est compris entre 45 et 110 nm et préférentiellement entre 70 et 100 nm.

8.  Substrat (6) selon l'une des revendications précédentes, **caractérisé en ce que** la seconde couche à bas indice (2) et/ou la quatrième couche à bas indice (4) sont à base d'oxyde de silicium, d'oxynitrure et/ou oxycarbure de silicium ou d'un oxyde mixte de silicium et d'aluminium.

9. Substrat (6) selon l'une des revendications précédentes, **caractérisé en ce que** ledit substrat est en verre, clair ou teinté dans la masse.

10. Substrat selon l'une des revendications précédentes, **caractérisé en ce que** sa réflexion lumineuse du côté où il est muni de l'empilement de couches minces s'en trouve abaissée d'une valeur minimale de 3 ou 4% selon un angle normal d'incidence.

11. Substrat selon l'une des revendications précédentes, **caractérisé en ce que** la colorimétrie de sa réflexion lumineuse du côté où il est muni de l'empilement de couches minces est telle que la valeur de b* correspondante dans le système de colorimétrie (L*, a*, b*) est négative, selon un angle normal d'incidence.

12. Substrat selon l'une des revendications précédentes, **caractérisé en ce que** l'empilement antireflet utilise au moins pour sa troisième couche à haut indice un oxyde mixte d'étain/zinc ou silicium titane de façon à ce qu'il est apte à subir un traitement thermique du type bombage, trempe, recuit et qu'il présente une durabilité mécanique et chimique élevée.

13. Substrat (6) selon l'une quelconque des revendications 1 à 12, **caractérisé en ce qu'**il est muni sur une de ses faces de l'empilement de couche antireflet et sur son autre face soit d'aucun empilement antireflet, soit également d'un empilement de couches antireflet, soit d'un autre type de revêtement antireflet, soit d'un revêtement ayant une autre fonctionnalité du type anti-solaire, bas-émissif, anti-salissures, anti-buée, anti-pluie, chauffant.

14. Substrat selon la revendication 13, **caractérisé en ce que** l'autre type de revêtement antireflet est choisi parmi les revêtements suivants :

   - une seule couche à bas indice, inférieur à 1,60 ou 1,50, notamment d'environ 1,35 - 1,48, notamment à base d'oxyde de silicium,
   - une seule couche dont l'indice de réfraction varie dans son épaisseur, notamment du type oxynitrure de silicium $SiO_xN_y$, avec x et y variant dans son épaisseur,
   - un empilement à deux couches, comprenant successivement une couche à haut indice d'au moins 1,8, notamment en oxyde d'étain, oxyde de zinc, oxyde de zirconium, oxyde de titane, nitrure de silicium ou d'aluminium, puis une couche à bas indice, inférieur à 1,65, notamment en oxyde, oxynitrure ou oxycarbure de silicium,
   - un empilement à trois couches, comportant successivement une couche d'indice moyen entre 1,65 et 1,8 du type oxycarbure ou oxynitrure de silicium et/ou d'aluminium, une couche d'indice élevé supérieur à 1,9 du type $SnO_2$, $TiO_2$, une couche à bas indice, inférieur à 1,65 du type oxyde mixte Si-Al, oxyde de silicium.
   - un revêtement anti-salissures

15. Vitrage multiple, notamment double, ou à structure feuilletée, comportant au moins deux substrats selon l'une quelconque des revendications 1 à 14, **caractérisé en ce que** les deux substrats verriers (6, 6') sont associés à l'aide d'une feuille (7) en matériau thermoplastique, le substrat (6) étant muni, côté opposé à l'assemblage, de l'empilement antireflet et le substrat (6') étant muni, côté opposé à l'assemblage, soit d'aucun revêtement antireflet, soit également d'un empilement antireflet, soit d'un autre type de revêtement antireflet, soit d'un revêtement ayant une autre fonctionnalité du type anti-solaire, bas-émissif, anti-salissures, anti-buée, anti-pluie, chauffant, ledit revêtement ayant une autre fonctionnalité pouvant aussi se trouver sur l'une des faces des substrats tournées vers la feuille thermoplastique d'assemblage.

16. Procédé d'obtention du vitrage selon la revendication 15, **caractérisé en ce qu'**on dépose le ou les empilements antireflets par pulvérisation cathodique, et l'éventuel revêtement antireflet par une technique sol-gel, une technique de pyrolyse du type CVD, CVD plasma, par pulvérisation cathodique ou décharge couronne.

17. Application du vitrage selon la revendication 15 en tant que vitrage intérieur ou extérieur pour le bâtiment, en tant que présentoir, comptoir de magasin pouvant être bombé, en tant qu'écran anti-éblouissement d'ordinateur, en tant que mobilier verrier.

**Patentansprüche**

1. Transparentes Substrat (6), insbesondere aus Glas, das auf mindestens einer seiner Seiten eine Antireflexionsbeschichtung aufweist, insbesondere bei normalem Einfall, hergestellt aus einem Stapel (A) dünner Schichten aus dielektrischem Material mit abwechselnd starken und schwachen Brechungsindizes, wobei der Stapel nacheinander umfasst:

   - eine erste Schicht (1) mit hohem Index mit einem Brechungsindex $n_1$ zwischen 1,8 und 2,2 und einer geometrischen Dicke $e_1$ zwischen 5 und 50 nm,
   - eine zweite Schicht (2) mit niedrigem Index mit einem Brechungsindex $n_2$ zwischen 1,35 und 1,65 und einer geometrischen Dicke $e_2$ zwischen 5 und 50 nm,
   - eine dritte Schicht (3) mit hohem Index mit einem Brechungsindex $n_3$ zwischen 1,8 und 2,2 und einer geometrischen Dicke $e_3$ zwischen 40 und 80 nm,
   - eine vierte Schicht (4) mit niedrigem Index mit einem Brechungsindex $n_4$ zwischen 1,35 und 1,65 und einer geometrischen Dicke $e_4$ zwischen 40 und 120 nm,

   wobei dieser Stapel einerseits angepasst ist, um eine gute Ästhetik des Substrats unabhängig vom Einfallswinkel zu garantieren, und andererseits Wärmebehandlungen unterzogen werden kann, **dadurch gekennzeichnet, dass** die erste Schicht mit hohem Index (1) und/oder die dritte Schicht mit hohem Index (3) auf Basis von gemischten Zinn-/Zinkoxiden ($Sn_xZn_yO_z$), oder von gemischtem Zink-Titanoxid ($TiZnO_x$) oder gemischtem Silicium-/Titanoxid ($Si_xTi_yO_z$) sind.

2. Substrat (6) nach Anspruch 1, **dadurch gekennzeichnet, dass** $n_1$ und/oder $n_3$ zwischen 1,85 und 2,15, insbesondere zwischen 1,90 und 2,10 liegen.

3. Substrat (6) nach einem der vorhergehenden Ansprüche, **dadurch gekennzeichnet, dass** $n_2$ und/oder $n_4$ zwischen 1,35 und 1,65 liegen.

4. Substrat (6) nach einem der vorhergehenden Ansprüche, **dadurch gekennzeichnet, dass** $e_1$ zwischen 10 und 30 nm oder zwischen 15 und 25 nm liegt.

5. Substrat (6) nach einem der vorhergehenden Ansprüche, **dadurch gekennzeichnet, dass** $e_2$ kleiner oder gleich 35 nm oder 30 nm ist und insbesondere zwischen 10 und 35 nm liegt.

6. Substrat (6) nach einem der vorhergehenden Ansprüche, **dadurch gekennzeichnet, dass** $e_3$ zwischen 45 und 80 nm liegt.

7. Substrat (6) nach einem der vorhergehenden Ansprüche, **dadurch gekennzeichnet, dass** $e_4$ zwischen 45 und 110 nm und vorzugsweise zwischen 70 und 100 nm liegt.

8. Substrat (6) nach einem der vorhergehenden Ansprüche, **dadurch gekennzeichnet, dass** die zweite Schicht (2) mit niedrigem Index und/oder die vierte Schicht (4) mit niedrigem Index auf Basis von Siliciumoxid, Siliciumoxynitrid und/oder Siliciumoxycarbid oder eines Mischoxids von Silicium und Aluminium sind.

9. Substrat (6) nach einem der vorhergehenden Ansprüche, **dadurch gekennzeichnet, dass** das Substrat aus Glas besteht, das in der Masse klar oder getönt ist.

10. Substrat nach einem der vorhergehenden Ansprüche, **dadurch gekennzeichnet, dass** seine Lichtreflexion auf der Seite, auf der es mit dem Stapel dünner Schichten versehen ist, bei einem normalen Einfallswinkel um einen Mindestwert von 3 oder 4 % verringert ist.

11. Substrat nach einem der vorhergehenden Ansprüche, **dadurch gekennzeichnet, dass** die Farbmetrik seiner Lichtreflexion auf der Seite, auf der es mit dem Stapel dünner Schichten versehen ist, derart ist, dass der entsprechende Wert von b* im Farbmetriksystem (L*, a*, b*) bei normalem Einfallswinkel negativ ist.

12. Substrat nach einem der vorhergehenden Ansprüche, **dadurch gekennzeichnet, dass** der Antireflexionsstapel zumindest bei seiner dritten Schicht mit hohem Index ein Zinn-/Zink- oder Siliciumtitan-Mischoxid einsetzt, sodass es einer Wärmebehandlung vom Typ Biegen, Vorspannen, Glühen unterzogen werden kann und hohe mechanische und chemische Beständigkeit aufweist.

**13.** Substrat (6) nach einem der Ansprüche 1 bis 12, **dadurch gekennzeichnet, dass** es auf einer seiner Seiten mit dem Stapel der Antireflexionsschicht und auf seiner anderen Seite entweder ohne Antireflexionsstapel oder ebenfalls mit einem Stapel von Antireflexionsschichten oder einer anderen Art von Antireflexionsbeschichtung oder einer Beschichtung mit einer anderen Funktionalität vom Typ sonnenschützend, emissionsarm, schmutzabweisend, beschlagfrei, regenabweisend, heizend versehen ist.

**14.** Substrat nach Anspruch 13, **dadurch gekennzeichnet, dass** die andere Art der Antireflexionsbeschichtung aus den folgenden Beschichtungen ausgewählt ist:

- einer einzelnen Schicht mit einem niedrigen Index von weniger als 1,60 oder 1,50, insbesondere um 1,35 bis 1,48, insbesondere auf der Basis von Siliciumoxid,
- einer einzelnen Schicht, deren Brechungsindex in ihrer Dicke variiert, insbesondere vom Siliciumoxynitrid-Typ $SiO_xN_y$, wobei x und y in ihrer Dicke variieren,
- einem Stapel mit zwei Schichten, der nacheinander eine Schicht mit einem hohen Index von mindestens 1,8, insbesondere aus Zinnoxid, Zinkoxid, Zirkoniumoxid, Titanoxid, Silicium- oder Aluminiumnitrid, dann eine Schicht mit niedrigem Index von weniger als 1,65, insbesondere aus Siliciumoxid, -oxynitrid oder -oxycarbid umfasst,
- einem Stapel mit drei Schichten, der nacheinander eine Schicht mit einem mittleren Index zwischen 1,65 und 1,8 vom Silicium- und/oder Aluminiumoxycarbid- oder -oxynitrid-Typ und eine Schicht mit einem hohen Index größer als 1,9 vom $SnO_2$- oder $TiO_2$-Typ, eine Schicht mit niedrigem Index, weniger als 1,65 vom Si-Al-Mischoxid- oder Siliciumoxid-Typ umfasst,
- einer schmutzabweisenden Beschichtung

**15.** Mehrfachverglasung, insbesondere Doppelverglasung, oder Verbundstruktur, umfassend mindestens zwei Substrate nach einem der Ansprüche 1 bis 14, **dadurch gekennzeichnet, dass** die beiden Glassubstrate (6, 6') mit Hilfe einer Folie (7) aus thermoplastischem Material zusammengefügt sind, wobei das Substrat (6) auf der der Anordnung gegenüberliegenden Seite mit dem Antireflexionsstapel versehen ist und das Substrat (6') auf der der Anordnung gegenüberliegenden Seite entweder ohne Antireflexionsstapel oder ebenfalls mit einem Stapel von Antireflexionsschichten oder einer anderen Art von Antireflexionsbeschichtung oder einer Beschichtung mit einer anderen Funktionalität vom Typ sonnenschützend, emissionsarm, schmutzabweisend, beschlagfrei, regenabweisend, heizend versehen ist, wobei die Beschichtung mit einer anderen Funktionalität auch auf einer der der thermoplastischen Montagefolie zugewandten Seiten der Substrate zu finden sein kann.

**16.** Verfahren zum Erhalten der Verglasung nach Anspruch 15, **dadurch gekennzeichnet, dass** der oder die Antireflexionsstapel durch Sputtern und die optionale Antireflexionsbeschichtung durch eine Sol-Gel-Technik, eine Pyrolysetechnik vom CVD-, CVD-Plasma-Typ, durch Sputtern oder Koronaentladung aufgebracht werden.

**17.** Anwendung der Verglasung nach Anspruch 15 als Innen- oder Außenverglasung für das Gebäude, als Schauvitrine, gegebenenfalls gebogene Ladentheke, als Computer-Blendschutz, als Glasmöbel.

**Claims**

**1.** A transparent substrate (6), particularly made of glass, comprising on at least one of its faces an antireflection coating, particularly at normal incidence made of a multilayer (A) of thin layers made of dielectrical material with alternatively high and low refractive indexes, **characterized in that** the multilayer comprises, in succession:

a high-index first layer (1), with a refractive index $n_1$ of between 1.8 and 2.2 and geometrical thickness $e_1$ of between 5 and 50 nm,
a low-index second layer (2), with a refractive index $n_2$ of between 1.35 and 1.65 and a geometrical thickness $e_2$ of between 5 and 50 nm,
a high-index third layer (3) with a refractive index $n_3$ of between 1.8 and 2.2 and a geometrical thickness $e_3$ of between 40 and 80 nm,
a low-index depth fourth layer (4) with a refractive index $n_4$ of between 1.35 and 1.65 and a geometrical thickness $e_4$ of between 40 and 120 nm,
this multilayer being designed on the one hand to guarantee the substrate a good esthetic appearance irrespective of the angle of incidence and, being able on the other hand to undergo heat treatment **characterized in that** the the high-index first layer (1) and/or the high-index third layer (3) are based on metal oxide(s) chosen from mixed tin/zinc oxides ($SnxZnyOz$) or mixed zinc-titanium oxides ($TiZnO_x$) or based on mixed silicon-titanium oxide ($SixTiyOz$).

2. The substrate (6) as claimed in claim 1, **characterized in that** $n_1$ and/or $n_3$ are between 1.85 and 2.15, particularly between 1.90 and 2.10.

3. The substrate (6) as claimed in one of the preceding claims, **characterized in that** $n_2$ and/or $n_4$ are between 1.35 and 1.65.

4. The substrate (6) as claimed in one of the preceding claims, **characterized in that** $e_1$ is between 10 and 30 nm or between 15 and 25 nm.

5. The substrate (6) as claimed in one of the preceding claims, **characterized in that** $e_2$ is between 5 and 50 nm, particularly less than or equal to 35 nm or to 30 nm, particularly being between 10 and 35 nm.

6. The substrate (6) as claimed in one of the preceding claims, **characterized in that** $e_3$ is between 45 and 80 nm.

7. The substrate (6) as claimed in one of the preceding claim, **characterized in that** $e_4$ is between 45 and 110 nm and preferably between 70 and 100 nm.

8. The substrate (6) as claimed in one of the preceding claims, **characterized in that** the low-index second layer (2) and/or the low-index fourth layer (4) are based on silicon oxide, silicon oxynitride and/or oxycarbide or on a mixed oxide of silicon and of aluminum.

9. The substrate (6) as claimed in one of the preceding claims, **characterized in that** said substrate is made of clear or bulk-tinted glass.

10. The substrate as claimed in one of the preceding claims, **characterized in that** its light reflection on the side on which it is equipped with the multilayer made up of thin layers is lowered by a minimum amount of 3 or 4% at a normal angle of incidence.

11. The substrate as claimed in one of the preceding claims, **characterized in that** the colorimetry of its light reflection on the side on which it is equipped with the multilayer made up of thin layers is such that the corresponding b* value in the (L*, a*, b*) colorimetry system is negative, at a normal angle of incidence.

12. The substrate as claimed in one of the preceding claims, **characterized in that** the antireflection multilayer uses, at least for its high-index third layer, a mixed tin/zinc or silicon titanium oxide, a silicon nitride, so that it is able to undergo a heat treatment of the curving, toughening, annealing type and so that it has enhanced mechanical and chemical durability.

13. The substrate (6) as claimed in any one of claims 1 to 12, **characterized in that** it is equipped on one of its faces with the anti-reflection multilayer and, on its other face, either with no antireflection multilayer or also with an antireflection multilayer, or with another type of antireflection coating, or with a coating having some other functionality of the solar protection, low emissivity, antifouling, antifogging, antirain or heating type.

14. The substrate as claimed in claim 13, **characterized in that** the other type of antireflection coating is chosen from the following coatings:

   - a single layer with a low index, lower than 1.60 or 1.50, particularly of about 1.35
   - 1.48, particularly based on silicon oxide,
   - a single layer the refractive index of which varies through its thickness, particularly of the silicon oxynitride $SiO_xN_y$, type, with x and y varying through its thickness,
   - a two-layer multilayer comprising, in succession, a layer with a high index of at least 1.8, particularly tin oxide, zinc oxide, zirconium oxide, titanium oxide, silicon or aluminum nitride, followed by a layer with a low index, below 1.65, particularly made of silicon oxide, oxynitride or oxycarbide,
   - a three-layer multilayer comprising, in succession, a layer of medium index of between 1.65 and 1.8 of the silicon and/or aluminum oxycarbide or oxynitride type,
- a layer with a high index above 1.9 of the $SnO_2$, $TiO_2$ type, a layer with a low index less than 1.65 of the mixed Si-Al oxide or silicon oxide type.
- an antifouling coating.

15. A multiple glazed unit, particularly a double glazed unit, or unit with a laminated structure, comprising at least two substrates as claimed in any one of claims 1 to 14, **characterized in that** the two glass substrates (6, 6') are combined using a sheet (7) of thermoplastic, the substrate (6) being equipped, on the opposite side to the assembly, with the antireflection multilayer and the substrate (6') being equipped, on the opposite side to the assembly, with either no antireflection coating or also an antireflection coating, or with another type of antireflection coating, or with a coating having another functionality of the solar protection, low emissivity, antifouling, antifogging, antirain or heating type, it also being possible for said coating with another functionality to be located on one of the faces of the substrates that face toward the thermoplastic sheet used for assembly.

16. A method for obtaining the glazing as claimed in claim 15, **characterized in that** the antireflection multilayer or multilayers is or are deposited by cathode sputtering and any antireflection coating there might be is deposited using a sol-gel, a pyrolysis technique of the CVD, or plasma CVD type, by cathode sputtering or by corona discharge.

17. An application of the glazing as claimed in claim 15 as interior or exterior glazing for buildings, as display cabinets, as counters in stores, that may be curved, as anti-dazzle computer screens, and as glass furniture.

*Fig. 1*

*Fig. 2*

**EP 1 519 902 B1**

**RÉFÉRENCES CITÉES DANS LA DESCRIPTION**

**Documents brevets cités dans la description**

- EP 0728712 A
- WO 9743224 A
- EP 0515847 A
- FR 2800998
- EP 791562 A
- EP 616883 A
- WO 9414716 A
- WO 9600194 A
- EP 0644164 A
- WO 9628394 A